# EUROPEAN PATENT APPLICATION

(11) **EP 2 949 868 A1**
(43) Date of publication of application: **02.12.2015**
(21) Application number: 15159156.7
(22) Date of filing: 16.03.2015
(51) Int. Cl.: F01D 5/20, F01D 5/14, F01D 5/18

(54) **A gas turbine blade tip comprising a gutter with decreased floor depth**

(30) Priority: 10.04.2014 GB 201406472
(71) Applicant: Rolls-Royce plc, London SW1E 6AT (GB)
(72) Inventor: Dawson, John, Derby, Derbyshire DE24 8BJ (GB); Milli, Andrea, Derby, Derbyshire DE24 8BJ (GB); Sellers, Paul, Derby, Derbyshire DE24 8BJ (GB)
(74) Representative: Rolls-Royce plc

(57) **Abstract**

A turbine blade has a trailing end and a leading end and a tip. A gutter is formed in the tip and extends to an exit defined in a region of the trailing end of the blade. The gutter is defined at least in part by a floor, and the floor defines a decreased depth in a region proximal to the exit than in a region distal to the exit.

## Description

### FIELD OF INVENTION

The present invention relates to a rotor blade, in particular but not exclusively, a turbine blade and/or a gas turbine engine.

### BACKGROUND

Gas turbine engines are typically employed to power aircraft. Typically a gas turbine engine will comprise a fan driven by an engine core. The engine core is generally made up of one or more turbines (e.g. high pressure and intermediate pressure turbines) which drive respective compressors via coaxial shafts. The fan is usually driven off an additional lower pressure turbine in the engine core.

A turbine of a gas turbine engine includes a rotor with one or more blades arranged circumferentially around the rotor; the blades may be mounted or welded to the rotor. There are two general types of blades for the high pressure turbine: shrouded and un-shrouded. At the high operating temperatures and cycle loadings of modern day engines, the un-shrouded blade has been found to be preferable for the high pressure turbine. The simplest un-shrouded blade has a flat tip geometry, but this flat tip geometry suffers from considerable aerodynamic loss due to over-tip leakage flow. Over tip leakage can be reduced by using either a "squealer" or a "winglet" blade tip configuration. The squealer configuration has walls that extend directly radially outward from a suction face and pressure face of the blade. The winglet configuration has walls that at least partially extend laterally (e.g. in a circumferential direction) from a pressure face and a suction face of the blade to form an overhang.

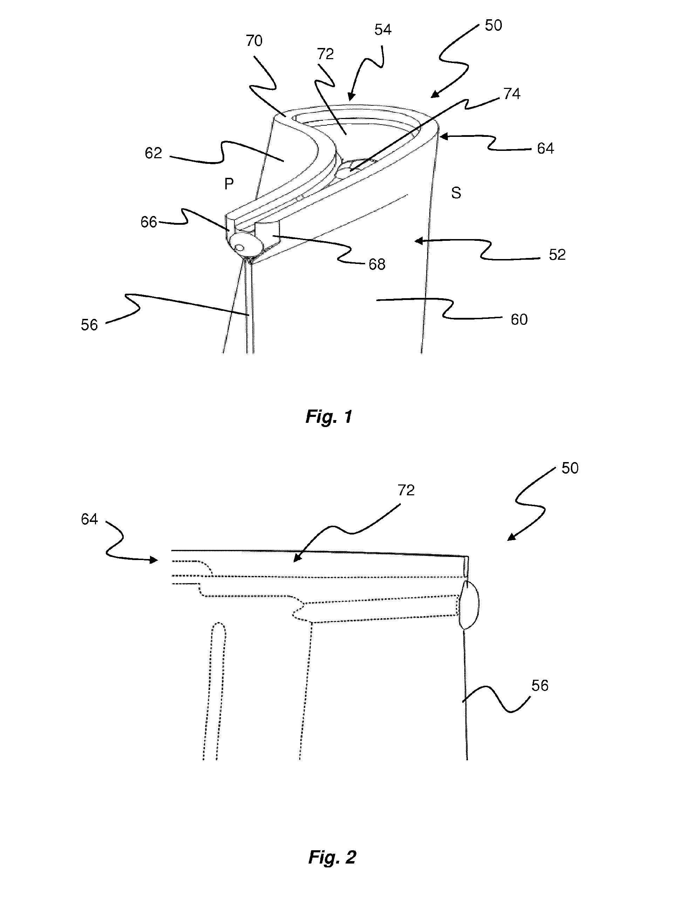

An example of one type of winglet blade is shown in Figures 1 and 2 and indicated generally at 50. The blade 50 has an aerofoil portion 52 which interacts with combustion gases passing through the turbine. The aerofoil portion 52 has a leading edge 54 and a trailing edge 56. The aerofoil portion 52 has a suction face 60 and a pressure face 62. The aerodynamic form of the portion 52 creates aerodynamic lift, which in turn creates rotation in the turbine, thus turning the turbine disc.

The blade 50 has a tip 64 which is at the radially outer end of the blade 50, when the turbine is rotating. The tip 64 carries winglets 66, 68 which project laterally from the blade 50, at the radially outer end of the suction face 60 and pressure face 62, respectively. The winglets provide an end face 70 to the blade 50.

A gutter 72 extends across the tip 64. That is, the gutter 72 is provided across the end face 70. The gutter 72 is of constant depth and extends to a position coincident with the trailing edge 56 of the aerofoil portion 52 to define a gutter exit. In use, over tip leakage gas flows from the pressure side P of the blade 50 into the gutter 72, the over tip leakage gas then splits into two vortices. The main (or primary) vortex rolls over to the suction side S of the blade and a secondary vortex exits through the gutter exit. The formation of the secondary vortex reduces the intensity of the primary vortex compared to a gutter with no exit (also referred to as a closed cavity configuration), thus improving aerodynamic efficiency. Further, the gutter and exit (or open cavity) encourages the entrainment of over tip leakage cooling flows within the gutter which helps to maintain acceptable temperatures at the blade tip.

Turbine blades are generally manufactured using investment casting methods. A cooling passage is generally formed within a high pressure turbine blade to permit the blade to operate at the high working temperatures of the high pressure turbine. During the casting process, tip prints are used to help support a core during casting. Before use, the passages formed from the tip prints are closed, for example by welding. A tip print weld is indicated at 74 in Figure 1 and is shown to be positioned in the gutter 72. The depth of the gutter is selected to accommodate the weld 74 and prevent the weld from protruding above the radial height defined by the winglets 66, 68.

There is a desire in the industry to increase aerodynamic performance, to improve cooling so the turbines can be run at higher temperatures and loadings, and to reduce weight of turbine blades. In some cases these criteria may be conflicting and there is a need to design to meet a desirable balance of weight, cooling and aerodynamic performance.

### SUMMARY OF INVENTION

The present invention seeks to address one or more of the problems associated with turbine blades of the prior art.

A first aspect of the invention provides a rotor blade (e.g. a turbine blade) for a gas turbine engine, the rotor blade having a trailing end and a leading end, a tip, and a gutter formed in the tip and extending to an exit defined in a region of the trailing end of the blade. The gutter is defined at least in part by a floor, and the floor defines a decreased depth portion of the gutter in a region proximal to the exit of the gutter.

The gutter may be considered to be deeper in a region distal to the exit than in a region proximal to the exit.

The provision of a decreased depth portion proximal to the exit means that coolant gases can be passed closer to the tip extremities (e.g. a cooling passage and/or gallery can be positioned closer to the tip extremities). Furthermore, the decreased depth portion can be altered to optimise aerodynamic performance.

In the present application reference to a trailing and leading end and a forward and rearward direction are defined with respect to air flow through a turbine to which, in use, the turbine blade will be attached. Reference to a radial direction refers to the radial direction when the turbine blade is arranged about a rotor.

The gutter may be considered to be a tip cavity, e.g. a cavity open at the blade tip.

The turbine blade may define an aerofoil. The blade may have a pressure side and a suction side. The blade and/or aerofoil may have a convex face and a concave face extending between the trailing end and the leading end of the blade or aerofoil. The pressure side may be the side of the blade and/or aerofoil having a concave face and the suction side may be the side of the blade and/or aerofoil having a convex face.

The blade may comprise a wall at the blade tip protruding from the aerofoil. The wall may define the gutter or tip cavity. The wall may extend along the pressure side and the suction side. The wall may define the exit. The wall may define an opening in the leading end of the blade. The wall may be continuous from the pressure side of the blade to the suction side of the blade, e.g. the turbine blade may comprise a wall extending from the pressure side around the leading end to the suction side of the blade. That is the gutter may be considered open only in one location (i.e. at the exit). The wall may be of constant lateral thickness around the tip of the blade or may be of varying thickness. The wall may define a squealer or winglet tip arrangement.

The gutter may have a minimum gutter depth at the exit.

The turbine blade may comprise a cooling passage defined within the aerofoil.

A cover may be positioned over a conduit (e.g. over an opening of a conduit) that extends to a cooling passage of the turbine blade. The cover may be provided in the gutter (e.g. at least partially within the gutter). The decreased depth portion may extend in a region between the cover and the exit. Reducing depth of the gutter in a region rearward of the cover means that tip cooling and aerodynamic performance can be optimised, whilst maintaining access for covering the conduit, e.g. welding to close the conduit. The cover may be defined by a welded region.

The depth of the gutter in the region of the cover may be such that the cover does not protrude from the gutter.

The turbine blade may comprise a plurality of covers positioned over conduits extending to the cooling passage of the turbine blade. The depth of the gutter rearward of the rearward-most cover (or the cover nearest to the exit) may be shorter than the depth of the gutter forward of the rearward-most cover.

The turbine blade may comprise a winglet on a pressure side and/or a suction side of the blade. The turbine blade of the first aspect is particularly beneficial when the turbine blade comprises a winglet. This is because, in the case of the blade having a winglet, the decreased depth portion contributes to reducing component weight. Furthermore, the decreased depth portion means that the area of the tip in direct contact with hot gases (often referred to as the "wetted area") is reduced, which improves tip cooling and engine efficiency. The decreased depth portion can be optimised to reduce the wetted area and improve aerodynamic performance.

The depth of the gutter may gradually decrease towards the exit. The depth of the gutter may decrease continually towards the exit. Alternatively, the depth of the gutter may decrease in a region distal to the exit and the depth of the gutter may be constant (but at a reduced depth, e.g. a minimum depth) in a region proximal to the exit.

The floor may be inclined to define the gradually decreasing depth of the gutter. The floor may be curved to define the gradually decreasing depth of the gutter.

A region of the gutter proximal to the leading end may be of constant depth. For example a region of the gutter where the cover is positioned and a region forward of the cover may be of constant depth.

The floor may define a step. The step may define a change in depth of the gutter. The step may define an inclined or curved ramp or the step may define a discrete change in depth (e.g. the step may define a face extending in a plane substantially parallel to a radial plane of the turbine blade or a plane substantially perpendicular to a region of the floor proximal to the leading end).

The turbine blade may comprise a cooling gallery extending from a cooling passage of the turbine to an opening in a trailing end of the blade.

The cooling gallery may be substantially parallel to the floor of the gutter in a region proximal to the exit. Arranging the cooling gallery to be substantially parallel to the floor of the gutter permits the cooling gallery and/or the cooling passage to be positioned as close as possible to the floor along the length of the floor in said region, improving tip cooling. As close as possible refers to a distance that does not undesirably affect structural integrity or aerodynamic performance of the blade.

A region of the gutter towards a leading end of the blade may be laterally wider than a region of the gutter towards a trailing end of the blade. For example, the gutter may be considered to be convergent in a lateral direction from the leading end to the trailing end. In exemplary embodiments, the gutter may include a mouth in a region proximal to the trailing end.

The gutter may comprise a necked portion in a region proximal to the exit. For example, the lateral width of the gutter may be narrower in a region proximal to the exit, e.g. the lateral width of the gutter may decrease to an extent greater than a profile as extrapolated from the remainder of the gutter shape.

The necked portion of the gutter may be defined by a necked section of the tip. For example, a wall may extend along the pressure side and the suction side of the blade tip and in a region proximal to the exit the wall of the pressure side and of the suction side may be arranged closer to each other so as to define the necked region of the gutter.

A second aspect of the invention may provide a gas turbine engine comprising a rotor blade of the first aspect.

The gas turbine engine may comprise a high pressure turbine having a turbine blade according to the first aspect.

### DESCRIPTION OF DRAWINGS

The invention will now be described, by way of example only, with reference to the accompanying drawings in which:
Figure 1 illustrates a perspective view of an upper portion of a turbine blade of the prior art;
Figure 2 illustrates a side view, showing hidden detail, of the turbine blade of Figure 1;
Figure 3 illustrates an axial cross section of a gas turbine engine;
Figure 4 illustrates a perspective view of an upper portion of a turbine blade;
Figure 5 illustrates a side view, showing hidden detail, of the turbine blade of Figure 4;
Figure 6 illustrates a plan view of a tip of the turbine blade of Figure 4;
Figure 7 illustrates a plan view of a tip of an alternative turbine blade; and
Figures 8 to 10 illustrate a side view, showing hidden detail, of further alternative turbine blades.

### DETAILED DESCRIPTION

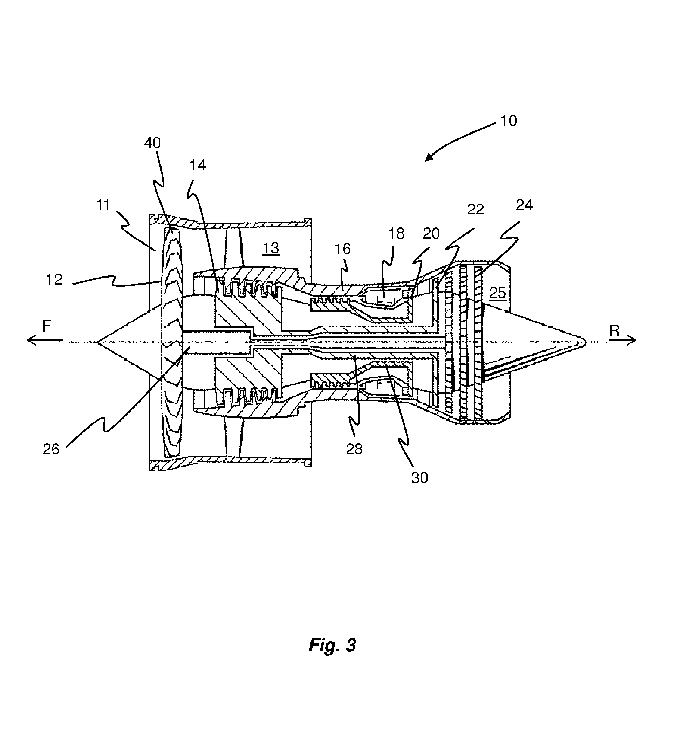

With reference to Figure 3 a bypass gas turbine engine is indicated at 10. The engine 10 comprises, in axial flow series, an air intake duct 11, fan 12, a bypass duct 13, an intermediate pressure compressor 14, a high pressure compressor 16, a combustor 18, a high pressure turbine 20, an intermediate pressure turbine 22, a low pressure turbine 24 and an exhaust nozzle 25. The fan 12, compressors 14, 16 and turbines 20, 22, 24 all rotate about the major axis of the gas turbine engine 10 and so define the axial direction of the gas turbine engine.

Air is drawn through the air intake duct 11 by the fan 12 where it is accelerated. A significant portion of the airflow is discharged through the bypass duct 13 generating a corresponding portion of the engine thrust. The remainder is drawn through the intermediate pressure compressor 14 into what is termed the core of the engine 10 where the air is compressed. A further stage of compression takes place in the high pressure compressor 16 before the air is mixed with fuel and burned in the combustor 18. The resulting hot working fluid is discharged through the high pressure turbine 20, the intermediate pressure turbine 22 and the low pressure turbine 24 in series where work is extracted from the working fluid. The work extracted drives the intake fan 12, the intermediate pressure compressor 14 and the high pressure compressor 16 via shafts 26, 28, 30. The working fluid, which has reduced in pressure and temperature, is then expelled through the exhaust nozzle 25 generating the remainder of the engine thrust.

In the present application a forward direction (indicated by arrow F in Figure 3) and a rearward direction (indicated by arrow R in Figure 3) are defined in terms of axial airflow through the engine 10. A radial direction refers to a direction extending radially outwardly or inwardly away from or towards a longitudinal axis of the gas turbine engine. When a turbine blade is described, a radial direction refers to the radial direction when the turbine blade is arranged within a gas turbine engine.

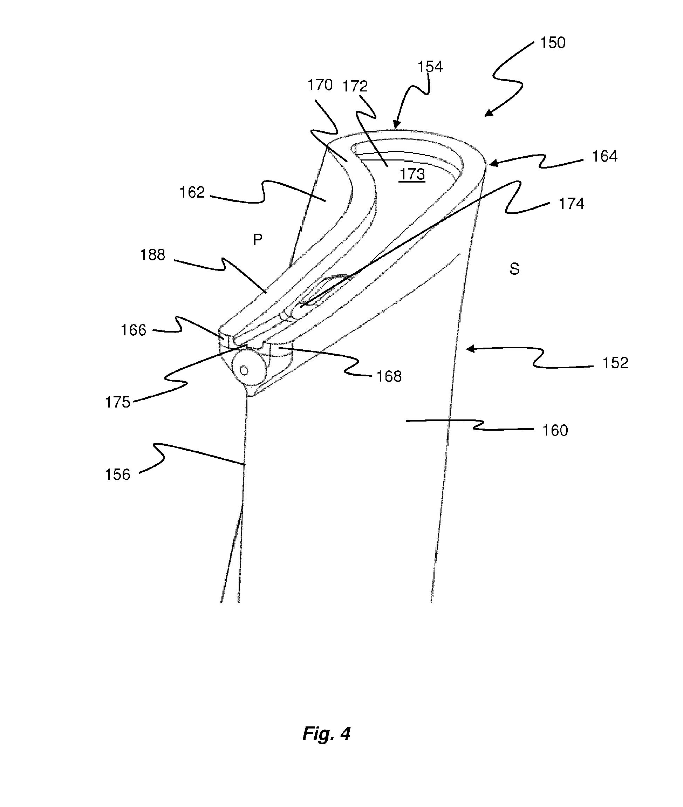

Figures 4 to 6 illustrate a single rotor blade 150 for use in one of the turbines 20, 22, 24, but in particular for use in the high pressure turbine 20 of the gas turbine engine 10. The blade 150 has an aerofoil portion 152 which interacts with combustion gases passing through the turbine. The aerofoil portion 152 has a leading end 154 and a trailing end 156. The aerofoil portion 152 has a suction face 160 on a suction side S of the blade and a pressure face 162 on a pressure side P of the blade. The aerodynamic form of the portion 152 creates aerodynamic lift, which in turn creates rotation in the turbine, thus turning a turbine disc about which the rotor blades 150 are arranged.

The blade 150 has a tip 164 which is at the radially outer end of the blade 150, when the turbine is rotating. The tip 164 carries winglets 166, 168 which project laterally from the blade 150, at the radially outer end of the suction face 160 and pressure face 162, respectively. The winglets provide an end face 170 to the blade 150.

A gutter 172 or cavity extends across the tip 164. That is, the gutter 172 is provided across the end face 170. The gutter 172 extends from a mouth 173 in a region proximal the leading end 154, to an exit 175 in a region proximal to the trailing end 156 (in the present embodiment the exit is substantially coincident to a trailing edge of the aerofoil). The exit is defined by an opening at a trailing end of the blade, such that in use, gas can flow from the gutter through the exit. The mouth of the gutter has a greater lateral width than the exit. The lateral width of the gutter converges from the mouth in a direction towards the exit. The width of the gutter is substantially constant in a region proximal to the exit.

The gutter 172 is open at the end face 170 and is defined by a wall 188 and by a floor 176. The wall 188 extends continuously along the pressure side, around the leading end, and along the suction side. However, in alternative embodiments the wall may define an opening to the gutter at a leading end of the blade. The wall 188 has a constant lateral thickness, but in alternative embodiments the wall may have varying thickness along the length thereof. The floor 176 defines a decreased depth portion 178 of the gutter 172, at the exit end of the gutter 172. In the present embodiment, the depth of the gutter 172 gradually decreases towards the exit. The floor is inclined so as to define the gradual decrease in depth of the portion 178 of the gutter towards the exit. A portion 180 of the blade proximal to the leading end (e.g. forward of the decreased depth portion 178 of the gutter) of the blade has a constant depth.

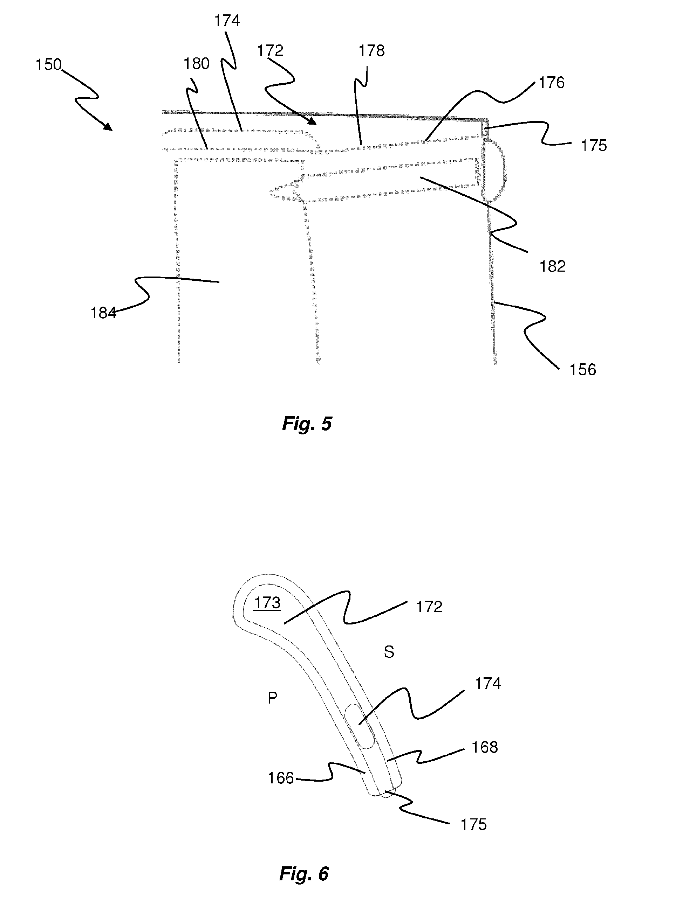

A weld 174 is provided within the gutter. The weld 174 is covering a passage through which the core is supported during the manufacture of the blade (i.e. during the casting process). The wall 188 defining the gutter is sufficiently high that the weld does not protrude from the gutter. The weld 174 shown in Figure 5 is one of a plurality of welds, the weld 174 shown in Figure 5 being the rearward-most of the plurality of welds (i.e. the weld nearest to the exit).

The decreased depth portion 178 extends from a rearward end of the weld 174 to the exit. The portion 180 of constant depth extends from a forward end of the weld. The depth of the mouth of the gutter is constant. The floor 176 defines a gutter of constant depth in the region of the weld, but the resultant depth of the gutter will vary due to the profile of the weld.

A cooling passage 184 is provided internally to the turbine blade 150. A cooling gallery 182 extends from the cooling passage 184 to the trailing end 156 of the blade. The cooling gallery is substantially parallel to the inclined floor 176 of the gutter 172.

In use, over tip leakage gas flows from the pressure side P of the blade 150 into the gutter 172, the over tip leakage gas then splits into two vortices. The main (or primary) vortex rolls over to the suction side S of the blade and a secondary vortex exits through the gutter exit 175. The formation of the secondary vortex reduces the intensity of the primary vortex compared to a gutter with no exit (a gutter with no exit may be referred to as a closed cavity configuration), thus improving aerodynamic efficiency. Further, the gutter and exit (which may be referred to as an open cavity) encourages the entrainment of over tip leakage cooling flows within the gutter which helps to maintain acceptable temperatures at the blade tip.

The provision of the portion 178 of decreased depth allows optimisation of the aerodynamic and cooling design within manufacturing constraints. The portion 178 of decreased depth also minimises the "external wetted area" (i.e. the area in direct contact with hot gas flow) and allows internal cooling passages to be positioned as close as possible to the blade extremities, while also maintaining sufficient flow of the cool cavity air to the blade trailing edge. In this way, the weight of the turbine blade is reduced and the cooling of the tip is improved whilst maintaining desirable aerodynamic performance.

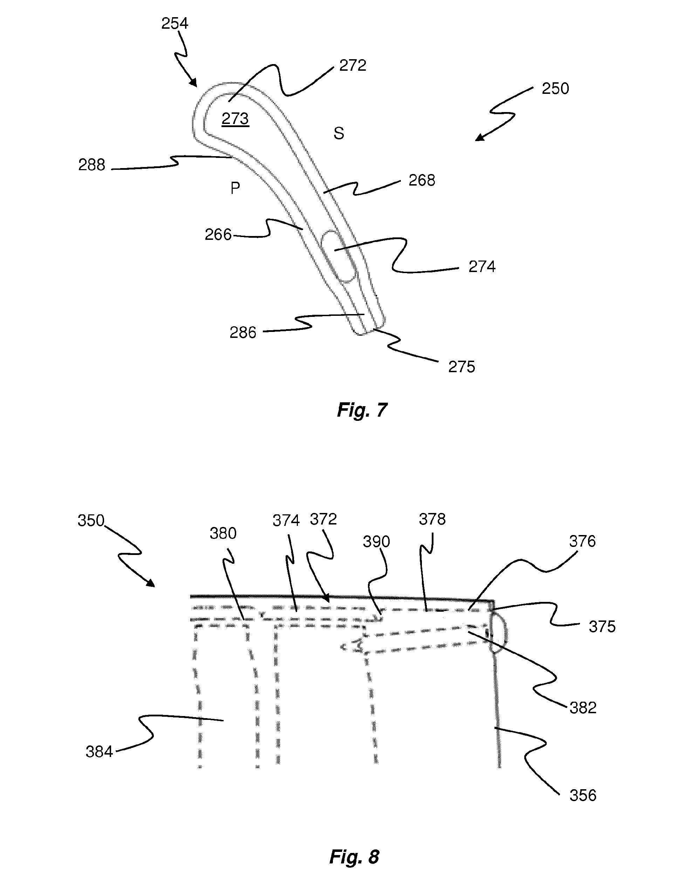

Referring now to Figure 7 an alternative turbine blade 250 is illustrated. Similar reference numerals are used for similar features as the previously described embodiment but with a prefix "2" instead of "1". Only the differences between the blade 150 of Figures 4 to 6 and the blade 250 of Figure 7 will be described.

The blade 250 includes a gutter 272 having a mouth 273 proximal to a leading end 254. The gutter laterally converges from the mouth 273 in a rearward direction towards the exit 275. The width of the gutter 272 is substantially constant in a region between the mouth and an end of the weld 274 proximal to the exit. The weld 274 being the rearward-most of the welds provided in the tip region of the blade. The gutter then tapers to a necked region 286, i.e. a narrower region, at a position rearward of the weld 274. The necked region 286 extends to the exit 275. The thickness of the wall 288 defining the gutter is substantially constant around the gutter 272. Near the exit 275, the wall 288 on the suction side opposes the wall 288 on the pressure side and the walls 288 on the suction side and pressure side are positioned laterally closer together near the exit so as to define the necked region 286.

The necked region 286 contributes to a further reduction in weight and a reduction in the area in contact with hot gases whilst maintaining acceptable aerodynamic performance and acceptable geometry for coating adhesion. As will be understood by the person skilled in the art, turbine blades are often coated (e.g. with a ceramic coating) to increase the operating temperature of the blades.

Referring now to Figure 8 an alternative turbine blade 350 is illustrated. Similar reference numerals are used for similar features as the embodiment of Figures 4 to 6 but with a prefix "3" instead of "1" to distinguish between embodiments. Only the differences between the blade 150 of Figures 4 to 6 and the blade 350 of Figure 8 will be described.

The floor 376 of the gutter 372 of blade 350 defines a step 390 between a portion 280 of the gutter of increased depth and a portion 378 of the gutter of decreased depth. The step 390 is positioned rearward of the weld 374 that is proximal to the trailing end 356. The floor 376 is inclined in the region of the step such that the step could be considered a ramp, but in alternative embodiments the step may include a surface perpendicular to the remainder of the floor 376. The portion 378 of decreased depth includes a region proximal to the exit 375 that is of constant depth.

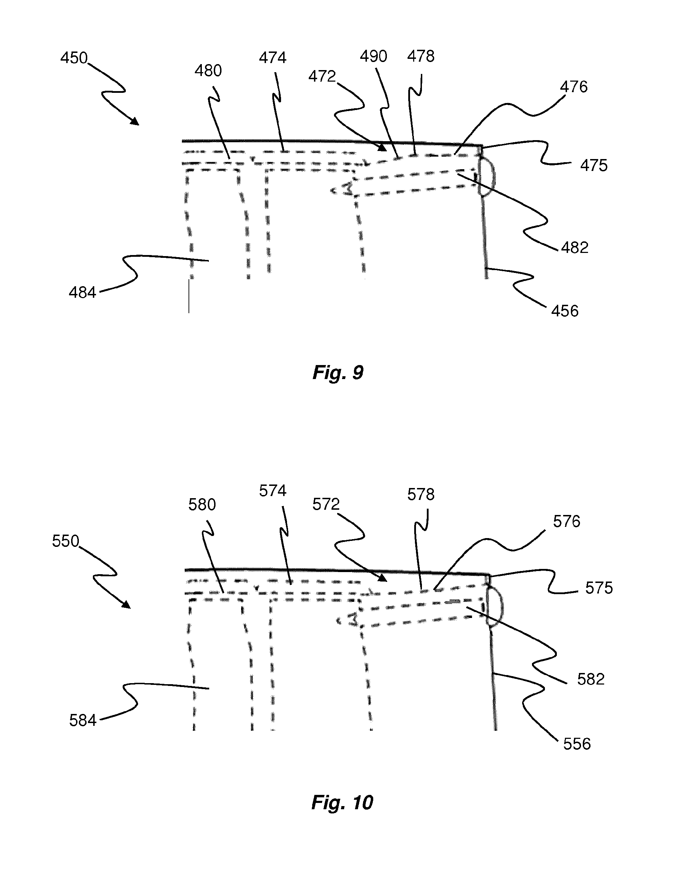

Referring now to Figure 9 an alternative turbine blade 450 is illustrated. Similar reference numerals are used for similar features as the embodiment of Figures 4 to 6 but with a prefix "4" instead of "1" to distinguish between embodiments. Only the differences between the blade 150 of Figures 4 to 6 and the blade 450 of Figure 9 will be described.

The floor 476 of the gutter 472 includes a stepped portion that defines a ramp 490, similar to the embodiment of Figure 8. However, in the presently described embodiment the ramp 490 extends for a greater distance in a direction extending between the leading and trailing end, which means that ramp 490 is angled between but not inclusive of 0 and 90° to the region of the floor of constant depth. The ramp is preferably is equal to or between 5° to 70°, or equal to or between 10° to 50°.

Referring now to Figure 10 an alternative turbine blade 550 is illustrated. Similar reference numerals are used for similar features as the embodiment of Figures 4 to 6 but with a prefix "5" instead of "1" to distinguish between embodiments. Only the differences between the blade 150 of Figures 4 to 6 and the blade 550 of Figure 10 will be described.

The floor 576 of the gutter 572 defines a curved profile in the portion 578 of decreased gutter depth. The curve is concave and is arranged so that the depth of the gutter decreases from a position adjacent the rearward-most weld 578 to the exit 575.

It will be appreciated by one skilled in the art that, where technical features have been described in association with one or more embodiments, this does not preclude the combination or replacement with features from other embodiments where this is appropriate. Furthermore, equivalent modifications and variations will be apparent to those skilled in the art from this disclosure. Accordingly, the exemplary embodiments of the invention set forth above are considered to be illustrative and not limiting.

For example, the depth of the gutter can be decreased in a trailing region of the blade compared to a leading region of the blade using numerous different arrangements, the described examples being merely illustrative of the possible arrangements.

The described embodiments all have a similar winglet shape, but it will be appreciated by the person skilled in the art that the concepts described in this application are applicable to any un-shrouded winglet design of turbine blade.

In further alternative embodiments, instead of the blade tip having a winglet configuration the blade tip may have a squealer configuration.

## Claims

1. A turbine blade having:
a trailing end and a leading end;
a tip; and
a gutter formed in the tip and extending to an exit defined in a region of the trailing end of the blade;
wherein the gutter is defined at least in part by a floor, and the floor defines a decreased depth portion of the gutter in a region proximal to the exit of the gutter.

2. The turbine blade according to claim 1, wherein the gutter has a minimum gutter depth at the exit.

3. The turbine blade according to claim 1 or 2, comprising a cover positioned over a conduit that extends to a cooling passage of the turbine blade, wherein the cover is provided in the gutter, and wherein the decreased depth portion extends in a region between the cover and the exit.

4. The turbine blade according to claim 3, wherein the cover is defined by a welded region.

5. The turbine blade according to any one of the previous claims comprising a winglet on a pressure side and/or a suction side of the blade.

6. The turbine blade according to any one of the previous claims, wherein the depth of the gutter gradually decreases towards the exit.

7. The turbine blade according to claim 6, wherein the floor is inclined to define the gradually decreasing depth of the gutter.

8. The turbine blade according to claim 6, wherein the floor is curved to define the gradually decreasing depth of the gutter.

9. The turbine blade according to any one of the previous claims, wherein the floor defines a step, the step defining a change in depth of the gutter.

10. The turbine blade according to any of the previous claims comprising a cooling gallery extending from a cooling passage of the turbine to an opening in a trailing end of the blade.

11. The turbine blade according to claim 10, wherein the cooling gallery is substantially parallel to the floor of the gutter in a region proximal to the exit.

12. The turbine blade according to any one of the previous claims, wherein a region of the gutter towards a leading end of the blade is laterally wider than a region of the gutter towards a trailing end of the blade.

13. The turbine blade according to claim 12, wherein the gutter comprises a necked portion in a region proximal to the exit.

14. A gas turbine engine comprising a turbine having the turbine blade according to any one of the previous claims.
